(19) Europäisches Patentamt

European Patent Office

Office européen des brevets

(11) **EP 1 563 742 A1**

(12) **EUROPEAN PATENT APPLICATION**

(43) Date of publication:
**17.08.2005 Bulletin 2005/33**

(51) Int Cl.7: **A23L 1/275**

(21) Application number: **05001194.9**

(22) Date of filing: **21.01.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Harada, Koichi**<br>  **Kawarabayashicho, Kameoka-shi Kyoto 621 (JP)**<br>• **Hanato, Ichiyo**<br>  **Kawarabayashicho, Kameoka-shi Kyoto 621 (JP)** |
| (30) Priority: **16.02.2004 JP 2004038913**<br>**06.01.2005 JP 2005001663** | (74) Representative: **Teipel, Stephan, Dr. et al**<br>**Lederer & Keller**<br>**Patentanwälte**<br>**Prinzregentenstrasse 16**<br>**80538 München (DE)** |
| (71) Applicant: **Riken Vitamin Co., Ltd.**<br>**Chiyoda-ku, Tokyo 101-8370 (JP)** | |

(54) **Anthocyanin pigments with improved heat-resistance**

(57)    The present invention is to provide anthocyanin pigments with improved heat-resistance and production thereof, and a method for coloring foods with said anthocyanin pigments and foods colored with said anthocyanin pigments. Heat-resistance in anthocyanin pigments is enhanced by adjusting an aqueous anthocyanin solution to a pH range of 4.0 to 6. 5 at a temperature of 40 to 100°C.

**Description**

BACKGROUND OF THE INVENTION

1. FIELD OF THE INVENTION

The present invention relates to an anthocyanin pigment with improved heat-resistance and production thereof, and a method for coloring a food with said pigment and a food colored by using said pigment.

2. DESCRIPTION OF RELATED ART

Since anthocyanin pigments display vivid red color in an acidic region, they have been widely used in coloration of acidic foods. However, anthocyanin pigments are known to become discolored and fade when exposed to light or heat, and various studies have been undertaken for preventing such discoloration and color fading.

For example, the followings are known:

(1) an anti-color fading agent comprising a nigerooligosaccharide as an active ingredient (see JP-A-189101/2000),
(2) a stabilization method of anthocyanin pigments which comprises adding 0.1- to 5.0-fold amount of glycyrrhizin or its salt to an anthocyanin pigment (see JP-A-263707/1997),
(3) a method for preventing anthocyanin pigments from color fading, which comprises adding myricetin or other flavone and/or kenferol or other flavonol, and phytin and/or phytic acid to anthocyanin pigments (see JP-A-019068/1987),
(4) an anti-color fading agent for a series of anthocyanin pigments, comprising natural chlorogenic acid and/or synthetic or natural caffeic acid as an active ingredient (see JP-A-065761/1983), and
(5) a method for preventing red cabbage pigments from color fading, which comprises adding rutin and/or quercetin and phytin and/or phytic acid to powder or acidic solution of red cabbages (see JP-A-282032/1986).

As mentioned above, addition of various compounds has been proposed so far in order to enhance stability of anthocyanin pigments, however, in fact, handling or preparation of such compounds require much time in the known methods, and heat-resistance is not enough for satisfactory effects.

SUMMARY OF THE INVENTION

It is an object of the present invention to provide an anthocyanin pigment with improved heat-resistance without any addition of compounds and production thereof, and a method for coloring a food with said pigment and a food colored by said pigment.

As the result of extensive studies on solving the above-mentioned problems, the present inventors have found that heat-resistance of pigments is enhanced by adjusting the pH of an aqueous solution containing an anthocyanin pigment to within a range of 4.0 to 6.5 at 20°C and heating the solution at a temperature range of 40 to 100°C. Based on these findings, the present inventors have further studied and completed the present invention.

Namely, the present invention comprises the followings (1) to (8):

(1) A method for producing an anthocyanin pigment with improved heat-resistance, which comprises adjusting the pH of an aqueous solution containing an anthocyanin pigment to within a range of 4.0 to 6.5 at 20°C and heating the solution at a temperature within a range of 40°C to 100°C.
(2) The method for producing an anthocyanin pigment according to the above (1), wherein the pH range is 5.0 to 6.0, and the heating temperature range is 80°C to 100°C.
(3) An anthocyanin pigment obtainable by the method according to the above (1) or (2),
(4) The anthocyanin pigment according to the above (3), wherein the increasing rate of color intensity (%) calculated by the following method is not less than 100%.

[Calculation method for increasing rate of color intensity]

A sample is weighed out in such a manner that absorbance to be measured falls within a range of 0.5±0. 005, and MacIlvaine buffer (pH 3.0) is added to accurately make up 100 ml. This solution is served as a test solution. A portion (15 mL) of the test solution is placed in a 25 mL-screw capped test tube (outer diameter 18 mm x length 160 mm; available from Nichiden Rika Glass Co.), and the cap of the test tube is screwed. The test tube is heated in a warm water bath of 80°C for 30 minutes under shading, and then cooled down to room temperature with water. Using

## EP 1 563 742 A1

Macllvaine buffer (pH 3.0) as a control, absorbance of the test solution at maximum absorption band of around 500 to 600 nm in a 1 cm cell is measured before heating and after heating and water cooling. The measured data were substituted into the following equation to obtain an increasing rate of color intensity (%). Increasing rate of color intensity (%) = Absorbance of test solution after heating and water cooling/Absorbance of test solution before heating x 100,

(5) The anthocyanin pigment according to the above (4), wherein the increasing rate of color intensity (%) is 110 to 140 %,

(6) The anthocyanin pigment according to the above (4), wherein the increasing rate of color intensity (%)is 120 to 140 %,

(7) A food which is colored by an anthocyanin pigment described in any one of the above (3) to (6),

(8) A method for coloring a food by an anthocyanin pigment described in any one of the above (3) to (6), and

(9) An anthocyanin pigment, wherein an increasing rate of color intensity calculated by the following method is not less than 100%.

[Calculation method for increasing rate of color intensity]

A sample is weighed out in such a manner that absorbance to be measured falls within a range of 0.5±0.005, and Macllvaine buffer (pH 3.0) is added to accurately make up 100 ml. This solution is served as a test solution. A portion (15 mL) of the test solution is placed in a 25 mL-screw capped test tube (outer diameter 18 mm x length 160 mm; available from Nichiden Rika Glass Co.), and the cap of the test tube is screwed. The test tube is heated in a warm water bath of 80°C for 30 minutes under shading, and then cooled down to room temperature with water. Using Macllvaine buffer (pH 3.0) as a control, absorbance of the test solution at maximum absorption band of around 500 to 600 nm in a 1 cm cell is measured before heating and after heating and water cooling. The measured data are substituted into the following equation to obtain an increasing rate of color intensity (%).

Increasing rate of color intensity (%) = Absorbance of test solution after heating and water cooling/Absorbance of test solution before heating x 100

The method for producing an anthocyanin pigment in accordance with the present invention has an effect that improves heat-resistance of anthocyanin pigments effectively and industrially without addition of other compounds such as anti-color fading agents. Also, the anthocyanin pigments of the present invention show an effect of excellent heat-resistance.

Further, foods which are colored by using an anthocyanin pigment with improved heat-resistance obtainable according to the method of the present invention show not only less color fading property when heated in the processing procedure, compared to foods which are colored using a conventional pigment, but also relatively moderate color fading after subsequent preservation, thereby to greatly increase commodity values.

DETAILED DESCRIPTION OF THE INVENTION

As the anthocyanin pigments used as the starting material in the present invention, there are exemplified red cabbage pigment, red rice pigment, red radish pigment, elderberry pigment, cowberry pigment, gooseberry pigment, cranberry pigment, salmonberry pigment, perilla pigment, thimbleberry pigment, strawberry pigment, dare sweet cherry pigment, cherry pigment, hibiscus pigment, huckleberry pigment, grape juice pigment, blackcurrant pigment, black carrot pigment, blackberry pigment, blueberry pigment, plum pigment, whortleberry pigment, boysenberry pigment, mulberry pigment, purple sweet potato pigment, purple corn pigment, dioscorea alata pigment, raspberry pigment, red currant pigment, loganberry pigment and other anthocyanin pigments.

The anthocyanin pigments can be extracted with an extraction solvent from each plant which is an original source. Usually, examples of such solvents to be used are water and a mixture of water and alcohol, wherein such solvents are made acidic with an inorganic acid or an organic acid. The inorganic acid includes, for example, phosphoric acid, hydrochloric acid, sulfuric acid and the like, and the organic acid includes, for example, adipic acid, citric acid, glucono-8-lactone, gluconic acid, tartaric acid, lactic acid, acetic acid, fumaric acid, malic acid, succinic acid, and the like. The pH of the extract is preferably within a range of about 1 to 4, and the mixing ratio of alcohol and water is preferably about 40/60 to 0/100 (v/v). The extraction is performed at room temperature and may be heated so long as the target compound is not decomposed.

If necessary, a paste such as sodium carboxymethylcellulose, methylcellulose, sodium alginate, sodium polyacrylate and others may be added to the pigment extract, and the mixture was made homogenous and allowed to stand. By this procedure, almost of impurities such as soluble proteins, parts of polysaccharides, celluloses, etc. are coprecipitated to give a clear pigment solution showing red to purple color. The pigment solution is concentrated and optionally purified with cation-exchange resin, anion-exchange resin, chelate resin, adsorbent resin, etc. Further, said concentrate or purified product of the pigments may be mixed with a suitable excipient such as lactose, dextrin, powdered millet jelly, processed starch, etc., and the mixture is dried and powdered.

In the present invention, any form of the above-mentioned pigment concentrate, purified pigment products or powdered pigments can be used. In the processing procedure of pigments, a pigment is first weighed out in such a manner that a solution to be treated show a color value within a range of about 0.01 to 1,000, preferably about 5 to 500, and water is added to the pigment or the pigment is dissolved in water. Here, it is preferred to use purified water obtained by distillation, ion-exchange, ultrafiltration or combination thereof. If necessary, polyalcohols, sugars, sugar alcohols or combination thereof may be appropriately added in the purification of water.

As used herein, the polyalcohols include, for example, propylene glycol, glycerin, etc., and the sugars include, for example, monosaccharides (e.g. xylose, glucose, fructose, etc.), oligosaccharides (e.g. sucrose, lactose, maltose, etc.), starch hydrolysates (e.g. dextrin, millet jelly, etc.), maltooligosaccharides (e.g. maltotriose, maltotetraose, maltopentaose, maltohexaose, etc.). As the sugar alcohols, there are exemplified sorbitol, mannitol, multitol, reduced millet jelly, and the like.

The color value of the solution to be treated can be determined according to the method as described in "17. Measurement of Color Value, The JAPAN'S SPECIFICATIONS AND STANDARDS FOR FOOD ADDITIVES, 7th Edit.".

Subsequently, an alkali is added to the above solution in such a manner that the pH is adjusted to 4. 0 to 6 . 5, preferably 5.0 to 6.0, at 20°C. Here, such alkali includes, for example, potassium hydroxide, sodium hydroxide, sodium carbonate, sodium bicarbonate, inorganic acid salts (e.g. tetrapotassium pyrophosphate, tetrasodium pyrophosphate, potassium polyphosphate, sodium polyphosphate, potassium metaphosphate, sodium metaphosphate, tripotassium phosphate, trisodium phosphate, etc.) and the like. These alkalis are previously dissolved in water and used preferably in the form of an aqueous solution.

The treated solution of which pH has been adjusted is heated within a temperature range of 40°C to 100°C, preferably 60°C to 100°C, more preferably 80°C to 100°C. There is no particular limitation to heating apparatuses, however, it is preferable to use an agitated mixing vessel. As such an agitated mixing vessel, a conventional agitated mixing vessel equipped with an agitator, a heating jacket, and a baffle may be used. The shape of the wing to be equipped with the agitator may be any one of propeller type, cross paddle type, fan turbine type, disc turbine type, anchor type, etc., among which propeller type is preferable.

Although heating time varies depending on the pH value of the solution to be treated and heating temperature, there is a tendency that the lower the pH or the heating temperature, the longer the heating time required. Since there is a risk of color fading when continued to heat beyond necessity, optimum conditions should be determined appropriately depending on the kind of pigments and quality of raw materials.

After heating of the solution to be treated, it is usually cooled to room temperature. Such cooling may be performed by any method including stepwise cooling and rapid cooling so long as it can cool the solution to be treated to room temperature. The cooled solution is usually subjected to measure color value and then diluted preferably with purified water, alcohols, polyalcohols, sugars, sugar alcohols or combination thereof into a required concentration, thereby giving commercial products. Here, the alcohol used is an alcohol having an ethyl alcohol concentration of 95.0 v/v % or higher used for food industry, of which specification is regulated as "aqueous alcohol, special grade" or "aqueous alcohol, first grade". In order to prevent these alcohols from diversion into drinking use, a denaturing agent such as food flavors, etc. is added to said alcohols, and such a denaturing agent can be selected depending on the purpose of use. As the above-mentioned alcohol, a non-denatured alcohol may be utilized if an approval based on Alcohol Business Law in Japan is obtained. Such alcohol is added mainly for the purpose of preservation and stabilization of said compositions due to antiseptic or antifungal action.

The anthocyanin pigments with improved heat-resistance obtained according to the process of the present invention show an increasing rate of color intensity (%) in not less than 100 %, preferably about 110 to 140 %, more preferably about 120 to 140 % as calculated in the following manner. It can be confirmed from these data that heat-resistance of the pigments is improved.

[Calculation method for increasing rate (%) of color intensity]

A sample was weighed out in such a manner that absorbance to be measured falls within a range of 0.5±0.005, and MacIlvaine buffer (pH 3.0) was added to accurately make up 100 ml. This solution was served as a test solution. A portion (15 mL) of the test solution was placed in a 25 mL-screw capped test tube (outer diameter 18 mm x length 160 mm; available from Nichiden Rika Glass Co.), and the cap of the test tube was screwed. The test tube was heated in a warm water bath of 80°C for 30 minutes under shading, and then cooled down to room temperature with water. Using Macllvaine buffer (pH 3.0) as a control, absorbance of the test solution at maximum absorption band of around 500 to 600 nm in a 1 cm cell was measured before heating and after heating followed by water cooling. The measured data were substituted for the following equation to obtain an increasing rate of color intensity (%).

Increasing rate of color intensity (%) = Absorbance of test

solution after heating followed by water cooling/Absorbance of test solution before heating x 100

The anthocyanin pigments obtained in the above-mentioned method can be used preferably for coloration of foods. There is no limitation to foods, however, foods which include heating step at a pH of <4.0 are preferable. Preferable examples of such foods are functional drinks containing fruit juice, flavor, functional elements, etc.; acidic drinks such as sports drinks and nutrition supplement drinks; pickles such as red pickled ginger, pickled ume (plum), ume pickle, pickled garlic (shiba flavor), fukujinzuke (sliced vegetables pickled soy sauce); jams; gellies; sherbets; candies; syrups, etc. According to the conventional method, foods are each colored into preferable color and tone.

EXAMPLES

Hereinafter, the present invention is described concretely by way of Examples.

Example 1

[Treatment of red radish pigment solution]

10.0 g of red radish pigment bulk (color value: about 500) was weighed out accurately, and the pigment was dissolved in purified water (80 mL) of 20°C. The solution was adjusted to a pH of 5.3 with aqueous sodium hydroxide (0.1 g/mL), and purified water was added to make up a total volume of 100 mL. This solution was served as a solution to be treated. A portion (90 mL) of the solution was placed in a 200 mL-Erlenmeyer flask with ground stopper, heated in a warm water bath of 90°C for one hour, and then cooled down to room temperature with water. The color value of the resultant solution was measured according to the method described in "17. Measurement of Color Value, The JAPAN'S SPECIFICATIONS AND STANDARDS FOR FOOD ADDITIVES, 7th Edit. " , as shown below. As the result, the color value was found to be 35.0.

[Measurement of color value]

A sample was weighed out accurately in such a manner that absorbance to be measured falls within a range of 0.3 to 0.7 and citric acid buffer (pH 3.0) was added to accurately make up 100 ml, which was served as a solution to be treated. Using citric acid buffer (pH 3.0) as a control, absorbance A of said solution at maximum absorption band of around 513 nm in a 1 cm cell was measured. The color value was measured according to the following equation:

Color value = A x 10/Amount (g) of sample weighed out

Comparison Example 1

10.0 g of red radish pigment bulk (color value: about 500) was weighed out accurately, and the pigment was dissolved in purified water (80 mL) of 20°C. Purified water was added to the solution to make up a total volume of 100 mL. This solution was served as a solution to be treated, and the pH of the solution was 2.7. A portion (90 mL) of the solution was placed in a 200 mL-Erlenmeyer flask with ground stopper, heated in a warm water bath of 90°C for one hour, and then cooled down to room temperature with water. The color value of the resultant solution was measured in a manner similar to Example 1, and found to be 49.0.

Example 2

[Treatment of red cabbage pigment solution]

30.0 g of red cabbage pigment concentrate (color value:about 200) was weighed out accurately, and the pigment was dissolved in purified water (60 mL) of 20°C. The solution was adjusted to a pH of 4.7 with aqueous sodium hydroxide (0.1 g/mL), and then purified water was added to make up a total volume of 100 mL. This solution was served as a solution to be treated. A portion (90 mL) of the solution was placed in a 200 mL-Erlenmeyer flask with ground stopper, heated in a warm water bath of 80°C for one hour, and cooled down to room temperature with water. The color value of the resultant solution was measured according to the method for measuring color value, described in "Japanese Standard of Natural Additives-2, JAPAN FOOD ADDITIVES ASSOCIATION, October 1, 1993, p. 129", as shown below. As the result, the color value was found to be 39.0.

[Measurement of color value]

A sample was weighed out accurately in such a manner that absorbance to be measured falls within a range of 0.3 to 0.7 and citric acid buffer (pH 3.0) was added to accurately make up a total volume of 100 ml, which was served as a test solution. Using citric acid buffer (pH 3.0) as a control, absorbance A of the test solution at maximum absorption band of around 536 nm in a 1 cm cell was measured. The color value was measured according to the following equation:

$$\text{Color value} = A \times 10/\text{Amount (g) of sample weighed out}$$

Comparison Example 2

30.0 g of red cabbage pigment concentrate (color value:about 200) was weighed out accurately, and dissolved in purified water (60 mL) of 20°C. Purified water of 20°C was added to the solution to make up a total volume of 100 mL. This solution was served as a solution to be treated. The pH value of said solution was 2.9. A portion (90 mL) of the solution was placed in a 200 mL-Erlenmeyer flask with ground stopper, heated in a warm water bath of 80°C for one hour, and then cooled down to room temperature with water. The color value of the resultant solution was measured in a manner similar to Example 2, and found to be 59.0.

Experiment 1

(Measurement of increasing rate of color intensity in each pigment obtained in Examples 1 and 2, and Comparison Examples 1 and 2)

[Sample]

    Red radish pigment bulk (used in Example 1)
    Pigment solution obtained in Example 1
    Pigment solution obtained in Comparison Example 1
    Red cabbage pigment concentrate (used in Example 2)
    Pigment solution obtained in Example 2
    Pigment solution obtained in Comparison Example 2

[Calculation method of increasing rate of color intensity]

A sample was weighed out in such a manner that absorbance to be measured falls within a range of 0. 5±0. 005 and MacIlvaine buffer (pH 3.0) was added to accurately make up a total volume of 100 ml, which was served as a test solution. A portion (15 mL) of the test solution was placed in a 25 mL-screw capped test tube (outer diameter 18 mm x length 160 mm; available from Nichiden Rika Glass Co.), and the cap of the test tube was screwed. The test tube was heated in a warm water bath of 80°C for 30 minutes under shading, and cooled down to room temperature with water. Using MacIlvaine buffer (pH 3.0) as a control, absorbance of the test solution at maximum absorption band of around 500 to 600 nm in a 1 cm cell was measured before heating and after heating followed by water cooling. The measured data were substituted for the following equation to obtain an increasing rate of color intensity (%).

Increasing rate of color intensity (%) = Absorbance of test solution after heating and water cooling/Absorbance of test solution before heating x 100

[Results]

The results are shown in Table 1.

Table 1

| Pigment sample | Increasing rate of color intensity (%) |
|---|---|
| Red radish pigment bulk | 98 |
| Pigment solution of Example 1 | 130 |
| Pigment solution of Comparison Example 1 | 97 |
| Red cabbage pigment concentrate | 85 |
| Pigment solution of Example 2 | 122 |
| Pigment solution of Comparison Example 2 | 84 |

As can be seen from Table 1, the pigment solutions obtained in Examples 1 and 2 increased color intensity by heating, while color fading was observed in all of other pigment samples.

Example 3

[Studies of treatment conditions]

20.0 g of red radish pigment bulk (color value: about 500) was weighed out accurately, and the pigment was dissolved in purified water (80 mL) of 20°C. The solutions were adjusted to a pH of 4.0, 5.0, 6.0 and 6.5 respectively, with aqueous sodium hydroxide (0.5 g/mL), and purified water was added to each solution to make up a total volume of 100 mL. These solutions were served as a solution to be treated. The solution (50 mL each) was placed in a 200 mL-Erlenmeyer flask with ground stopper, heated in a warm water bath while changing the temperature and the time, and then cooled down to room temperature with water. The color value of the resultant solution was measured according to the method for measuring color value as described in Example 1. The color value of each solution was adjusted to about 65.0 by addition of hydrogenated starch hydrolysates (70 %)(Product Name: AMAMIR; available from Towa Chemical Industry Co., Ltd).

Comparison Example 3

20.0 g of red radish pigmentation bulk (color value: about 500) was weighed out accurately, and the pigment was dissolved in purified water (80 mL) of 20°C. Purified water was added to the solution to make up a total volume of 100 mL. This solution was served as a solution to be treated, and the pH of said solution was 2.7. The solution (50 mL) was placed in a 200 mL-Erlenmeyer flask with ground stopper, heated in a warm water bath while changing the temperature and the time, and then cooled down to room temperature with water. The color value of the resultant solution was measured according to the method for measuring color value, as described in Example 1. The color value of the solution was adjusted to about 65.0 by addition of hydrogenated starch hydrolysates (70 %).

Experiment 2

[Measurement of increasing rate of color intensity in each pigment solution obtained in Example 3 and Comparison Example 3]

Increasing rate of color intensity in each pigment solution obtained in Example 3 and Comparison Example 3 was measured in a manner similar to Experiment 1. The results are shown in Table 2.

Table 2

| | Increasing rate of color intensity (%) | | | | |
|---|---|---|---|---|---|
| | pH 2.7 | pH 4.0 | pH 5.0 | pH 6.0 | pH 6.5 |
| 40°C, 24 hours | 83.6 | 101.1 | 102.4 | 106.0 | 105.2 |
| 60°C, 60 min. | 87.8 | 100.0 | 108.4 | 111.4 | 105.0 |
| 60°C, 180 min. | 88.3 | 106.3 | 120.2 | 123.6 | 109.3 |
| 80°C, 60 min. | 91.0 | 113.8 | 128.2 | 130.2 | 114.6 |
| 90°C, 30 min. | 93.0 | 117.5 | 131.0 | 132.4 | 113.5 |

Color intensity in the solutions of Example 3 (pH 4.0, 5.0, 6.0 or 6.5) was increased except for only one case, and the higher the pH within a range of 4.0 to 6.0 or the higher the temperature, the higher the color intensity. On the other hand, color fading was observed in all conditions tested for the solution (pH 2.7) of Comparison Example 3.

Example 4

[Pickled red ginger]

(a) Salted ginger was cut into short and small pieces of 5 mm in width and desalted in running water for one hour. The ginger pieces were placed in a net cage, thereby to remove water.
(b) A condiment solution was prepared in a mixing ratio as shown in Table 3. Desalted ginger (120 g) was added to the condiment solution (60 g), and the mixture was pickled at 5°C for 5 days.
(c) Red ginger pickles after the pickling procedure were divided into three parts together with the pickling solution, and each solution was filled in a sack made from PE/PET mutilayer film (150 mm x 150 mm), heat-sealed, heated and sterilized in a warm water bath of 60°C for 45 minutes, and then cooled down to room temperature with water.
(d) Among the three sacks, one sack was opened before stability test for preservation, and the remaining two sacks were preserved at 40°C for 3 days and at 40°C for 7 days, respectively and then opened to measure the absorbance, thereby obtaining the remaining rate (%) of pigment. The results are shown in Table 4.

[Measurement of remaining rate of pigment]

Using water as a control, absorbance A of the pickling solution (before heating) of pickled red ginger at maximum absorption band of around 513 nm in a 1 cm cell was measured. Next, absorbance A' of the pickling solution before and after stability test for preservation was measured in a similar manner as above. The remaining rate (%) of the pigment was calculated according to the following equation:

Remaining rate (%) of pigment = A/A' x 100

Table 3:

| Condiment solution for pickling red ginger (figure is expressed in terms of % by mass) | |
|---|---|
| Edible salt | 5.0 |
| Citric acid | 3.2 |
| Sodium glutamate | 0.3 |
| Red radish pigment | * |
| Purified water | 91.5 |

* Red radish pigment sample (i.e. red radish pigment bulk and pigment solution obtained in Example 1 or Comparison Example 1) was weighed out and added in such a manner that absorbance of said condiment solution becomes to be 6.0.

Table 4

| Pigment sample | Remaining rate of pigment (%) | | |
|---|---|---|---|
| | Before stability test of preservation | 40°C, 3 days | 40°C, 7 days |
| Red radish pigment bulk | 75 | 55 | 36 |
| Pigment solution of Example 1 | 100 100 | 86 86 | 65 65 |
| Pigment solution of Comparison Example 1 | 74 74 | 54 54 | 36 36 |

The pigment solution obtained in Example 1 did not lower color value even when heated and sterilized, and subsequent color fading was relatively moderate in the subsequent preservation test at 40°C. On the contrary, untreated red radish pigment bulk and pigment solution obtained in Comparison Example 1 showed color fading at a great rate when heated and sterilized, and color fading rapidly proceeded in subsequent stability test at 40°C.

Example 5

[Syrup]

(a) Starting solutions were prepared in a mixing ratio as shown in Table 5, and they were heated and sterilized at 90°C for 30 minutes to give a syrup.
(b) Absorbance of the syrup was measured before and after heating to obtain remaining rate (%) of pigment. The results are shown in Table 6.

[Measurement of remaining rate of pigment]

Using water as a control, absorbance A of the syrup (before heating) at maximum absorption band of around 536 nm in a 1 cm cell was measured. Next, absorbance A' of the syrup after heating and sterilization was measured in a similar manner as above, and the remaining rate (%) of pigment was calculated according to the following equation:

Remaining rate (%) of pigment = A'/A x 100

Table 5:

| Syrup | |
|---|---|
| Granulated sugar | 110.0 g |
| Citric acid | 0.4 g |
| Sodium citrate | 0.1 g |
| Strawberry essence | 0.6 g |
| Red cabbage pigment | * |
| Purified water | To make up 180 mL |

* Red cabbage pigment (i. e. red cabbage pigment bulk and pigment solution obtained in Example 2 or Comparison Example 2) was weighed out and added in such a manner that absorbance of the syrup becomes to be 2.4.

Table 6:

| | Remaining rate (%) of pigment |
|---|---|
| Red cabbage pigment concentrate | 76 |
| Pigment solution of Example 2 | 104 |
| Pigment solution of Comparison Example 2 | 74 |

In case where the pigment solution of Example 2 was used, color value was increased by heating/sterilization treatment. On the contrary, when untreated red cabbage pigment bulk and pigment solution of Comparison Example 2 were used, color fading proceeded at a great rate by heating and sterilization treatment.

INDUSTRIAL APPLICABILITY

Since the anthocyanin pigments of the present invention are greatly improved in heat-resistance under acidic conditions, they can be applied to foods, preferably foods including heating procedure especially under the pH conditions of <4.0.

**Claims**

1. A method for producing an anthocyanin pigment with improved heat-resistance, which comprises adjusting the pH of an aqueous solution containing an anthocyanin pigment to within a range of 4.0 to 6.5 at 20°C and heating the solution at a temperature within a range of 40°C to 100°C.

2. The method for producing an anthocyanin pigment according to claim 1, wherein the pH range is 5.0 to 6.0, and the heating temperature range is 80°C to 100°C.

3. An anthocyanin pigment obtainable by the method according to claim 1 or 2.

4. The anthocyanin pigment according to claim 3, wherein an increasing rate of color intensity calculated by the following method is not less than 100%.
[Calculation method for increasing rate of color intensity]
A sample is weighed out in such a manner that absorbance to be measured falls within a range of 0.5±0.005, and MacIlvaine buffer (pH 3.0) is added to accurately make up 100 ml. This solution is served as a test solution. A portion (15 mL) of the test solution is placed in a 25 mL-screw capped test tube (outer diameter 18 mm x length 160 mm; available from Nichiden Rika Glass Co.), and the cap of the test tube is screwed. The test tube is heated in a warm water bath of 80°C for 30 minutes under shading, and then cooled down to room temperature with water. Using MacIlvaine buffer (pH 3.0) as a control, absorbance of the test solution at maximum absorption band of around 500 to 600 nm in a 1 cm cell is measured before heating and after heating and water cooling. The measured data are substituted into the following equation to obtain an increasing rate of color intensity (%). Increasing rate of color intensity (%) = Absorbance of test solution after heating and water cooling/Absorbance of test solution before heating x 100

5. The anthocyanin pigment according to claim 4, wherein the increasing rate of color intensity (%)is 110 to 140 %.

6. The anthocyanin pigment according to claim 4, wherein the increasing rate of color intensity (%)is 120 to 140 %.

7. A food which is colored by an anthocyanin pigment described in any one of claims 3 to 6.

8. A method for coloring a food by an anthocyanin pigment described in any one of claims 3 to 6.

9. An anthocyanin pigment, wherein an increasing rate of color intensity calculated by the following method is not less than 100%.
[Calculation method for increasing rate of color intensity]
A sample is weighed out in such a manner that absorbance to be measured falls within a range of 0.5±0.005, and MacIlvaine buffer (pH 3.0) is added to accurately make up 100 ml. This solution is served as a test solution. A portion (15 mL) of the test solution is placed in a 25 mL-screw capped test tube (outer diameter 18 mm x length 160 mm; available from Nichiden Rika Glass Co.), and the cap of the test tube is screwed. The test tube is heated in a warm water bath of 80°C for 30 minutes under shading, and then cooled down to room temperature with water. Using MacIlvaine buffer (pH 3.0) as a control, absorbance of the test solution at maximum absorption band of around 500 to 600 nm in a 1 cm cell is measured before heating and after heating and water cooling. The measured data are substituted into the following equation to obtain an increasing rate of color intensity (%).

Increasing rate of color intensity (%) = Absorbance of test solution after heating and water cooling/Absorbance of test solution before heating x 100

**European Patent Office**

# EUROPEAN SEARCH REPORT

Application Number

EP 05 00 1194

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 132 791 A (FOX ET AL) 17 October 2000 (2000-10-17) * claims 1,4; example 1; table 1 * * column 2, line 36 - column 3, line 45 * * column 4, lines 10-21,29-33 * ----- | 1-9 | A23L1/275 |
| X | EP 1 183 954 A (SAN-EI GEN F.F.I., INC) 6 March 2002 (2002-03-06) * claims 1,5; example 2 * ----- | 1,3-9 | |
| X | PATENT ABSTRACTS OF JAPAN vol. 1998, no. 10, 31 August 1998 (1998-08-31) & JP 10 117747 A (KAGOME CO LTD), 12 May 1998 (1998-05-12) * abstract * ----- | 1,3-9 | |
| X | EL-SAYED M ABDEL-AAL ET AL: "Composition and stability of anthocyanins in blue-grained wheat" JOURNAL OF AGRICULTURAL AND FOOD CHEMISTRY, vol. 51, no. 8, 2003, pages 2174-2180, XP002329684 CANADA * page 2176, paragraph 3; figures 3,4 * ----- | 1-9 | **TECHNICAL FIELDS SEARCHED (Int.Cl.7)** A23L |
| X | DATABASE WPI Section Ch, Week 199416 Derwent Publications Ltd., London, GB; Class D13, AN 1987-025706 XP002329685 & JP 60 22465B B2 (SAN-EI CHEM IND LTD) 30 March 1994 (1994-03-30) * abstract * ----- -/-- | 1-9 | |

The present search report has been drawn up for all claims

| Place of search | Date of completion of the search | Examiner |
|---|---|---|
| Stockholm | 6 June 2005 | Tallgren, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 00 1194

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN<br>vol. 012, no. 191 (C-501),<br>3 June 1988 (1988-06-03)<br>& JP 62 297364 A (SAN EI CHEM IND LTD),<br>24 December 1987 (1987-12-24)<br>* abstract *<br>----- | 1-9 | |
| X | MOK C ET AL: "Heat stability of sunflower-hull anthocyanin pigment."<br>JOURNAL OF FOOD SCIENCE 1991 KOREA FOOD RES. INST., BANWOL, KYONGKIDO, KOREA REPUBLIC,<br>vol. 56, no. 2, 15 May 1992 (1992-05-15),<br>page 553, XP002329697<br>* the whole document *<br>----- | 1-9 | |
| | | | TECHNICAL FIELDS SEARCHED (Int.Cl.7) |

The present search report has been drawn up for all claims

| Place of search | Date of completion of the search | Examiner |
|---|---|---|
| Stockholm | 6 June 2005 | Tallgren, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 00 1194

This annex lists the patent family members relating to the patent documents cited in  the above-mentioned European search report.
The members are as contained in the European Patent Office EDP file on
The European Patent Office is in no way liable for these particulars which are merely  given for the purpose of information.

06-06-2005

| Patent document cited in search report | | Publication date | Patent family member(s) | | Publication date |
|---|---|---|---|---|---|
| US 6132791 | A | 17-10-2000 | NONE | | |
| EP 1183954 | A | 06-03-2002 | JP | 2000336354 A | 05-12-2000 |
| | | | AU | 5248800 A | 24-09-2001 |
| | | | CA | 2378464 A1 | 20-09-2001 |
| | | | EP | 1183954 A1 | 06-03-2002 |
| | | | WO | 0167894 A1 | 20-09-2001 |
| | | | US | 2003215550 A1 | 20-11-2003 |
| | | | US | 6572906 B1 | 03-06-2003 |
| JP 10117747 | A | 12-05-1998 | NONE | | |
| JP 6022465B | B2 | 12-12-1986 | JP | 1897903 C | 23-01-1995 |
| | | | JP | 6022465 B | 30-03-1994 |
| | | | JP | 61282032 A | 12-12-1986 |
| JP 62297364 | A | 24-12-1987 | NONE | | |

EPO FORM P0459

For more details about this annex : see Official Journal of the European Patent Office, No. 12/82